# EUROPEAN PATENT APPLICATION

(11) **EP 4 198 571 A1**
(43) Date of publication of application: **21.06.2023**
(21) Application number: 21275191.1
(22) Date of filing: 17.12.2021
(51) Int. Cl.: G01S 17/894, G01S 7/481

(54) **UNDERWATER IMAGING**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

In some examples, an underwater imaging apparatus comprises a source of electromagnetic radiation configured to generate a short-range illuminating beam at a selected wavelength, and an image sensor for generating image data representing a scene or object to be illuminated by the illuminating beam, the image sensor sensitive to the selected wavelength.

## Description

### FIELD

The present invention relates to underwater imaging.

### BACKGROUND

Underwater imaging broadly falls into two categories - passive and active. In the passive case, environmental light reflected from an object is used by an image sensor of an imaging device in order to generate image data representing the object in question. That is, illumination of the object to be imaged is by way of environmental light only. Accordingly, since environmental conditions may often not be optimal due to, e.g., the attenuation of light underwater, passive optical imaging devices have limited application. Active optical imaging devices on the other hand use a source of illumination in order to illuminate an object. The source of illumination can be collocated with the imaging device and/or separate therefrom. Light from the source of illumination that is reflected from the object is used by the image sensor in order to generate image data representing the object. Such devices therefore find utility in a larger number circumstances compared to the passive alternative as they may be used in environmentally unfavourable conditions (e.g., where background illumination is insufficient for the purposes of imaging).

Nevertheless, in the active case, attenuation of the illuminating beam due to the participating medium can be problematic. To offset this, and therefore increase the useable range and utility of such devices underwater, wavelengths for an illuminating beam associated with low loss can be used. For example, green light can be used for illuminating an object to be imaged since it has wavelength that is attenuated to a lesser degree than, e.g., red light.

### SUMMARY

According to a first aspect of the present disclosure, there is provided an underwater imaging apparatus, comprising a source of electromagnetic radiation configured to generate a short-range illuminating beam at a selected wavelength, and an image sensor for generating image data representing a scene or object to be illuminated by the illuminating beam, the image sensor sensitive to the selected wavelength. The source of electromagnetic radiation can be used to generate an illuminating beam with a wavelength selected in the near infra-red or short wavelength infra-red regions of the electromagnetic spectrum.

In an implementation of the first aspect, the underwater imaging apparatus can further comprise a controller configured to modify an output power of the source of electromagnetic radiation, whereby to vary a range of the illuminating beam. A sensor can be provided and configured to generate a measure of turbidity of a participating medium for the underwater imaging apparatus. In an example, the controller can modify the output power of the source of electromagnetic radiation on the basis of a generated measure of turbidity. A collimating structure can be used to collimate an illuminating beam. The underwater imaging apparatus can further comprise a timing system configured to control an exposure parameter for the image sensor, the exposure parameter comprising one or more of a time at which the image sensor is active, a time period over which the image sensor is active, a time at which the source of electromagnetic radiation is active, and a time period over which the source of electromagnetic radiation is active. In an example, the source of electromagnetic radiation can be tuneable, whereby to vary the wavelength of the illuminating beam within a range between around 900-3000nm. Alternatively, or in addition, multiple sources can be used, each selected to cover (possibly overlapping) regions of the electromagnetic spectrum.

According to a second aspect of the present disclosure, there is provided a method of optical underwater imaging, comprising generating a short-range illuminating beam at a selected wavelength, and generating, using an image sensor, image data representing a scene or object to be illuminated by the illuminating beam, the image sensor sensitive to the selected wavelength. The selected wavelength can comprise a wavelength in the near infra-red or short wavelength infra-red regions of the electromagnetic spectrum. In an example, the selected wavelength can comprise a relatively high-loss wavelength for a participating medium comprising, e.g., seawater. That is, the attenuation of the selected wavelength can be relatively higher than the attenuation of an, e.g., relatively shorter wavelength. The method can further comprise pulsing the illuminating beam, whereby to generate a series of beams, and generating time of flight measurements on the basis of a time of receipt of respective pulses at the image sensor. In an example, the illuminating beam can be scanned. The method can further comprise gating exposure of the image sensor, whereby to generate image data at selected distances from the image sensor. The method can further comprise generating a measure of turbidity of a participating medium, and selecting the wavelength on the basis of the generated measure.

According to a third aspect of the present disclosure, there is provided a platform comprising an underwater imaging apparatus as provided according to the first aspect. In an example, the platform can comprise a UUV or other underwater vehicle (manned or unmanned).

### BRIEF DESCRIPTION OF THE FIGURES

Embodiments of the invention will now be described by way of example only with reference to the figures, in which:
Figure 1 is a schematic representation of an underwater imaging apparatus according to an example;
Figure 2 is a schematic representation of platform comprising an underwater imaging apparatus according to an example;
Figure 3 is a flow diagram of a method according to an example; and
Figure 4 is a flow diagram of a method according to an example.

### DETAILED DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

Unmanned underwater vehicles (UUV) can be used to image objects underwater. For example, an underwater imaging apparatus of a UUV can be used to capture images for the purposes of gathering intelligence, fault detection and so on. According to an example, an underwater imaging apparatus can be used in near approaches to objects. That is, in the context of a UUV for example, the UUV may undertake a near approach to an object or asset to be imaged. As such, a high attenuation illuminating wavelength can be used, enabling an illuminating beam for the underwater imaging apparatus to penetrate the participating medium (e.g., seawater) to the required distance to enable an object to be illuminated, but, due to the high attenuation, stymieing detection by, e.g., a hostile observer. That is, as imaging occurs over a relatively short distance, only short-range illumination need be used. This is in contrast to typical active underwater imaging systems which rely on illuminating beams selected to maximise the distance over which an imaging apparatus can be used. Such active systems select wavelengths for the illuminating beam that have low attenuation in water.

In an example, a source of electromagnetic radiation can be used to generate a short-range illuminating beam at a predetermined wavelength for an imaging apparatus. A wavelength of the illuminating beam can be highly attenuated in a participating medium, such as water/seawater for example. As such, an illuminating beam can penetrate the participating medium over a desired distance, but an observer, such as a hostile observer for example, would need to be very close to the imaging apparatus to detect the illuminating beam, thereby minimising the chances of an imaging apparatus and/or the UUV to which it is mounted being detected.

In an example, a wavelength of the illuminating beam can be selected in the near infra-red or short wavelength infra-red regions of the electromagnetic spectrum. For example, a wavelength between the range 800-3000nm can be selected. For example, a wavelength for an illuminating beam can be selected at 900nm, 1200nm, 1450nm or 1950nm. A choice of wavelength selected can depend on the local environmental conditions and/or imaging distance. In an example, a tuneable source of electromagnetic radiation can be used to enable a wavelength of the illuminating beam to be varied.

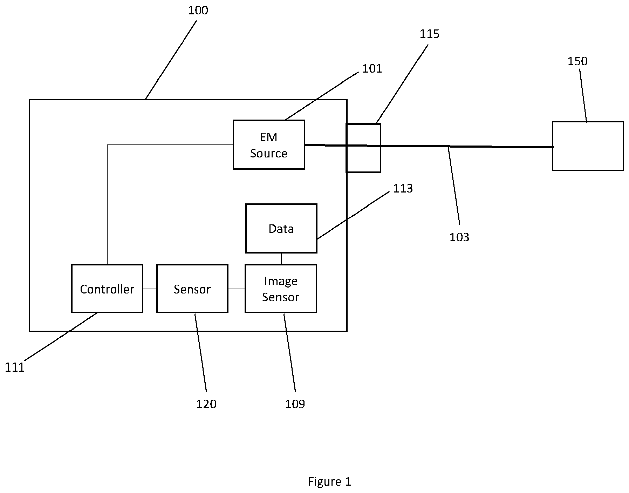

Figure 1 is a schematic representation of an underwater imaging apparatus 100 according to an example. In the example of figure 1, a source of electromagnetic radiation 101 is configured to generate a short-range illuminating beam 103. In an example, the short-range illuminating beam can comprise a predetermined wavelength selected in the near infra-red region of the electromagnetic spectrum. An image sensor 109 is configured to generate image data 113 representing a scene or object 150 to be illuminated by the illuminating beam 103. In an example, the image sensor 109 is sensitive to the selected wavelength of the illuminating beam 103. The source of electromagnetic radiation can be tuneable, whereby to vary the wavelength of the illuminating beam within a range between around 900-3000nm, and can comprise one or more laser diodes and/or LEDs for example. The range noted above can be implemented using multiple sources, each one of which being configured or selected to generate an optical signal with a wavelength within the range noted above.

Light from the illuminating beam 103 reflected from the object 150 is incident on the image sensor 109, which in turn converts the detected light into an electrical signal representing an image of the object 150. The source 101 and image sensor 109 may be provided as part of the same apparatus, as shown in figure 1 for example, or may be provided as separate devices.

Apparatus 100 can comprise a sensor 120 configured to generate a measure representing turbidity of a participating medium. In an example, a participating medium is the medium within which the illuminating beam 103 is transmitted. Accordingly, the participating medium is likely to be the medium within which the apparatus 100 is disposed, such as seawater for example, although it is possible that the apparatus 100 may be disposed outside of the participating medium but so positioned/configured to enable the source 101 to generate the illuminating beam 103 within the participating medium.

In the example of figure 1, a controller 111 can select, on the basis a measure representing turbidity of the participating medium, a wavelength for the illuminating beam 103. That is, the sensor 120 can generate data representing the turbidity of a participating medium, the data thus representing a measure of the degree to which the participating medium is cloudy/hazy. Put another way, sensor 120 can generate a measure of the degree to which the participating medium (e.g., water such as seawater) loses its transparency due to the presence of suspended particulates. In an example, sensor 120 can be a nephelometer or turbidimeter configured to measure the intensity of light scattered at 90 degrees as a beam of light passes through a sample of the participating medium.

The turbidity of the participating medium will affect the degree to which the illuminating beam 103 is attenuated before reaching the object to be illuminated 150. Accordingly, controller 111 can use the data generated by the sensor 120 to select a wavelength for the illuminating beam 103 in order to mitigate any effects, such as attenuation of the illuminating beam 103, that may occur as a result of the turbidity of the participating medium. For example, a relatively turbid participating medium will attenuate the illuminating beam 103 to a higher degree than one which is relatively less turbid since attenuation of the illuminating beam 103 is the loss of intensity due to intrinsic absorption by the participating medium, which will be composed of water and dissolved impurities, organic matter and inorganic particulates. According to an example, the controller 111 can select a relatively less lossy wavelength (e.g., 900nm) for an illuminating beam in a participating medium that is turbid (e.g., with a measure of turbidity from sensor 120 that is above a predetermined threshold value). Conversely, controller 111 can select a relatively more lossy wavelength (e.g., 1950nm) for an illuminating beam in a participating medium that is less turbid (e.g., with a measure of turbidity from sensor 120 that is below a predetermined threshold value). Various degrees of threshold value can be provided between these mapping to appropriate wavelength values, such as 1200nm and 1450nm and so on. Controller 111 can also be used to select an output power for the source 101 for a selected wavelength, thereby enabling, e.g., intensity of the illuminating beam 103 to be varied. Similarly to the selection of wavelength, output power can be selected on the basis of data from sensor 120, with higher intensities for the illuminating beam mapped to more turbid conditions and so on. It will be appreciated that selection of a wavelength for the illuminating beam may be restricted to a range within the near infra-red or short wavelength infra-red regions of the spectrum. Accordingly, even though a selection may be geared to increase the distance over which an illuminating beam is effective, the overall distance is still much less than typical systems that use, e,g., green light for illumination.

In an example, apparatus 100 can comprise a collimating structure 115 configured to collimate the illuminating beam 103. For example, a lens or lens structure may be used to focus the illuminating beam. The collimating structure 115 can be fixed in nature, whereby to provide a fixed degree of collimation for an illuminating beam 103, or can be tuneable in order to enable the degree of collimation to be varied as desired (e.g., depending on the environmental conditions and/or distance from and nature of object 150). The collimating structure 115 can comprise a lens assembly with one or more fixed and/or movable lenses. In some examples, structure 115 may not be present. For instance, it may be desirable for the illuminating beam to diverge in order to enable as much of an object to be imaged 150 to be illuminated as possible. Structure 115 is shown outside the apparatus 100, but may be provided therewithin, and may form an interface between the apparatus 100 and the participating medium.

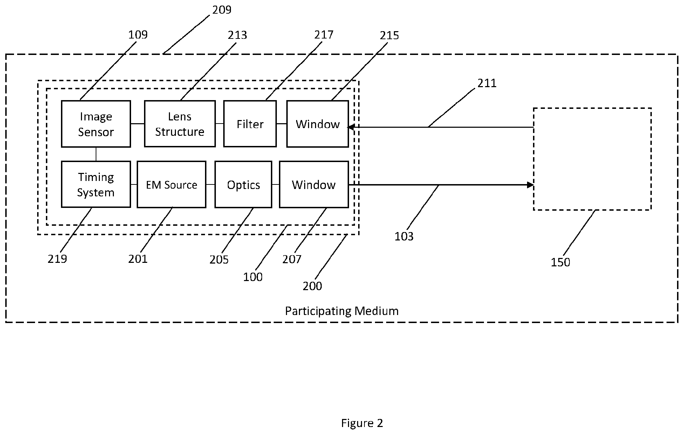

Figure 2 is a schematic representation of a platform comprising an underwater imaging apparatus according to an example. Platform 200 comprises an underwater imaging apparatus 100, such as that described above with reference to figure 1 for example. Platform 200 can be a UUV or submarine for example. The EM source 201 generates an illuminating beam at a selected wavelength, as described above. In the example of figure 2, the illuminating beam can be sent through optics 205 and window 207 before reaching the participating medium 209. Optics 205 can be used to enable the illuminating beam to illuminate a desired area at a specified distance. In an example, optics 205 can comprise the collimating structure 115. Thus, in an example, optics 205 can be used to focus (or defocus) an illuminating beam in order to enable a desired area of an object to be illuminated 150 to illuminated. Accordingly, an illuminating beam 103 can be conditioned using optics 205, such as by using lenses to collimate the optical signal 103 as described above. In some examples, a diverging beam may be desirable, in which case collimation may not occur. A window 207, which is transparent to the illuminating beam 103, can be provided as an interface between the apparatus 100 and the participating medium 209.

In the example of figure 2, the illuminating beam 103 travels through the participating medium 209 (e.g., seawater) and is reflected by the object being sensed 150. The reflected light 211 travels through the participating medium 209 and can be captured by, e.g., an objective lens structure 213 after passing through a window 215 which is transparent to the reflected beam 211 and can be provided as an interface between the apparatus 100 and the participating medium 209. The received reflected light 211 can be conditioned using the lens structure 213 in order to, e.g., focus it onto the image sensor 109, which can comprise a detector configured to convert the reflected light 211 into an electrical signal.

A filter 217, such as a band pass filter, can be used to, e.g., restrict ingress of background light to the apparatus 100, thereby increasing the signal to noise ratio and decreasing transmission errors. In an example, the pass band of the optical bandpass filter can be tuned or modified on the basis of the wavelength of the illuminating beam 103. In an example, multiple band pass filters can be used, each one corresponding to a selected wavelength for an optical signal. The reflected beam 211 is incident on the image sensor 109, which is sensitive to the wavelength of the illuminating beam 103.

Accordingly, with reference to figure 2, the underwater imaging apparatus 100 of the system generates an illuminating beam with a wavelength that can be selected in the near infra-red or short wavelength regions of the electromagnetic spectrum. The illuminating beam travels over a short range to illuminate an object 150. As described above, apparatus 100 can comprise a sensor to generate a measure representing turbidity of the participating medium 219. As described above, a controller can select, on the basis the measure representing turbidity, the wavelength and/or power for the illuminating beam 103.

According to an example, apparatus 100 can comprise a timing system 219 configured to control an exposure parameter. The exposure parameter can comprise one or more of a time at which the image sensor 109 is active, a time period over which the image sensor 109 is active, a time at which the source of electromagnetic radiation is active, and a time period over which the source of electromagnetic radiation is active.

As such, a pseudo shutter can be implemented in which the image sensor and/or the source is only active for a selected time or time intervals and/or over a selected time period. In this way, the image sensor 109 can be 'gated', such that it is configured to receive light from a selected distance range according to the delay of the shutter after the light pulse, thereby enabling, e.g., three-dimensional imagery to be generated.

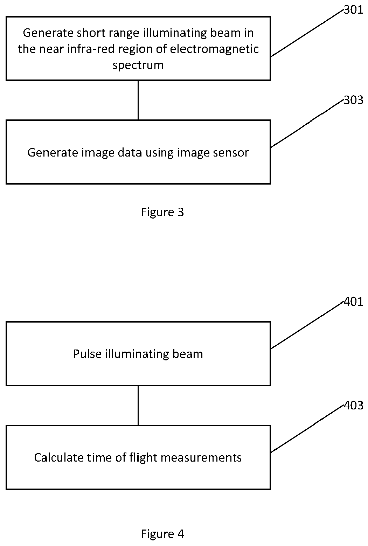

Figure 3 is a flow diagram of a method according to an example. In the example of figure 3, a method of optical underwater imaging comprises generating a short-range illuminating beam at a predetermined or selected wavelength selected in the near infra-red region of the electromagnetic spectrum at block 301. In block 303, image data representing a scene or object to be illuminated by the illuminating beam is generated by an image sensor, the image sensor sensitive to the selected wavelength.

Figure 4 is a flow diagram of a method according to an example. At block 401, the illuminating beam is pulsed, whereby to generate a series of beams. For example, the illuminating beam can be pulsed at regular (or irregular) intervals such as every 1 second for example and for preselected periods of time, such as 3ns for example. In block 403, time of flight measurements are calculated on the basis of a time of receipt of respective pulses at the image sensor 109. In an example, the illuminating beam can be scanned.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the spirit and scope of the instant disclosure. The embodiments disclosed herein should be considered in all respects illustrative and not restrictive. Reference should be made to the appended claims and their equivalents in determining the scope of the instant disclosure.

## Claims

1. Underwater imaging apparatus, comprising:
a source of electromagnetic radiation configured to generate a short-range illuminating beam at a selected wavelength; and
an image sensor for generating image data representing a scene or object to be illuminated by the illuminating beam, the image sensor sensitive to the selected wavelength.

2. The underwater imaging apparatus as claimed in claim 1, wherein the source of electromagnetic radiation is configured to generate an illuminating beam with a wavelength selected in the near infra-red or short wavelength infra-red regions of the electromagnetic spectrum.

3. The underwater imaging apparatus as claimed in claim 1 or 2, further comprising:
a controller configured to modify an output power of the source of electromagnetic radiation, whereby to vary a range of the illuminating beam.

4. The underwater imaging apparatus as claimed in any preceding claim, further comprising:
a sensor configured to generate a measure of turbidity of a participating medium for the underwater imaging apparatus.

5. The underwater imaging apparatus as claimed in claim 4, wherein the controller is configured to modify the output power of the source of electromagnetic radiation on the basis of a generated measure of turbidity.

6. The underwater imaging apparatus as claimed in any preceding claim, further comprising:
a collimating structure to collimate an illuminating beam.

7. The underwater imaging apparatus as claimed in any preceding claim, further comprising:
a timing system configured to control an exposure parameter for the image sensor, the exposure parameter comprising one or more of a time at which the image sensor is active, a time period over which the image sensor is active, a time at which the source of electromagnetic radiation is active, and a time period over which the source of electromagnetic radiation is active.

8. The underwater imaging apparatus as claimed in any preceding claim, wherein the source of electromagnetic radiation is tuneable, whereby to vary the wavelength of the illuminating beam within a range between around 900-3000nm.

9. A method of optical underwater imaging, the method comprising:
generating a short-range illuminating beam at a selected wavelength; and
generating, using an image sensor, image data representing a scene or object to be illuminated by the illuminating beam, the image sensor sensitive to the selected wavelength.

10. The method as claimed in claim 9, wherein the selected wavelength comprises a wavelength in the near infra-red or short wavelength infra-red regions of the electromagnetic spectrum.

11. The method as claimed in claim 9 or 10, further comprising:
pulsing the illuminating beam, whereby to generate a series of beams; and
generating time of flight measurements on the basis of a time of receipt of respective pulses at the image sensor.

12. The method as claimed in any of claims 9 to 11, further comprising:
scanning the illuminating beam.

13. The method as claimed in any of claims 9 to 12, further comprising:
gating exposure of the image sensor, whereby to generate image data at selected distances from the image sensor.

14. The method as claimed in any of claims 9 to 14, further comprising:
generating a measure of turbidity of a participating medium; and
selecting the wavelength on the basis of the generated measure.

15. A platform comprising an underwater imaging apparatus as claimed in any of claims 1 to 8.
